# DEMANDE DE BREVET EUROPEEN

(11) **EP 0 940 751 A1**
(43) Date de publication de la demande: **08.09.1999**
(21) Numéro de dépôt: 99400485.1
(22) Date de dépôt: 01.03.1999
(51) Int. Cl.: G06F 9/46

(54) **Procédé et architecture logicielle pour la transmission d'objects au sein d'un environnement distribué, conservant les références entre objects**

(30) Priorité: 05.03.1998 FR 9802686
(71) Demandeur: ALCATEL, 75008 Paris (FR)
(72) Inventeur: Theodora, Eric, 91940 Les Ulis (FR); Aidan, Bruno, 95210 Saint Gratien (FR)
(74) Mandataire: Lamoureux, Bernard

(57) **Abrégé**

Architecture logicielle comportant un ensemble d'objets, chaque objet pouvant posséder des références vers d'autres objets, caractérisée en ce que ladite architecture comporte en outre,
- une table de correspondance (T), et,
- un ensemble d'objets intermédiaires (Oₗ),
- et en ce que, chaque référence d'un premier objet vers un second objet est représentée par un pointeur au sein dudit premier objet vers un objet intermédiaire, ledit objet intermédiaire possédant un moyen pour rechercher dans ladite table de correspondance (T) à partir d'un identifiant dudit second objet (IdO_{B}), un pointeur vers ledit second objet (PtrO_{B}).

## Description

La présente invention concerne les environnements de traitement distribués (DPE pour *Distributed Processing Environment,* an anglais) orientés objets. Plus particulièrement, elle concerne une architecture permettant de transmettre un objet d'une première station vers une seconde station, tout en conservant les références vers d'autres objets que peut posséder cet objet. Elle concerne aussi un procédé permettant de mettre en place cette architecture.

Une application orientée objets peut être vue comme une collection d'objets. De façon classique, un objet qui a besoin des services d'un autre objet fait appel à une méthode dudit autre objet. Pour cela, le premier objet doit posséder une référence du second objet. Cette référence est classiquement mise en oeuvre sous la forme d'un pointeur.

Il existe par ailleurs des environnements informatiques qui permettent le développement d'applications logicielles orientées objets sans tenir compte de la localisation des objets au sein du réseau informatique, ni de la gestion des communications entre ceux-ci. À titre d'exemples, on peut mentionner deux grandes familles de tels environnements: DCOM d'une part et CORBA d'autre part. DCOM *(Distributed Component Object Model)* est conçu et commercialisé par la société Microsoft Corporation. CORBA *(Common Object Request Broker Architecture)* est issu de spécifications de l'OMG *(Open Management Group).*

Le but de ces environnements est de gérer le fait que l'objet dont on requiert les services peut être n'importe où sur le réseau.

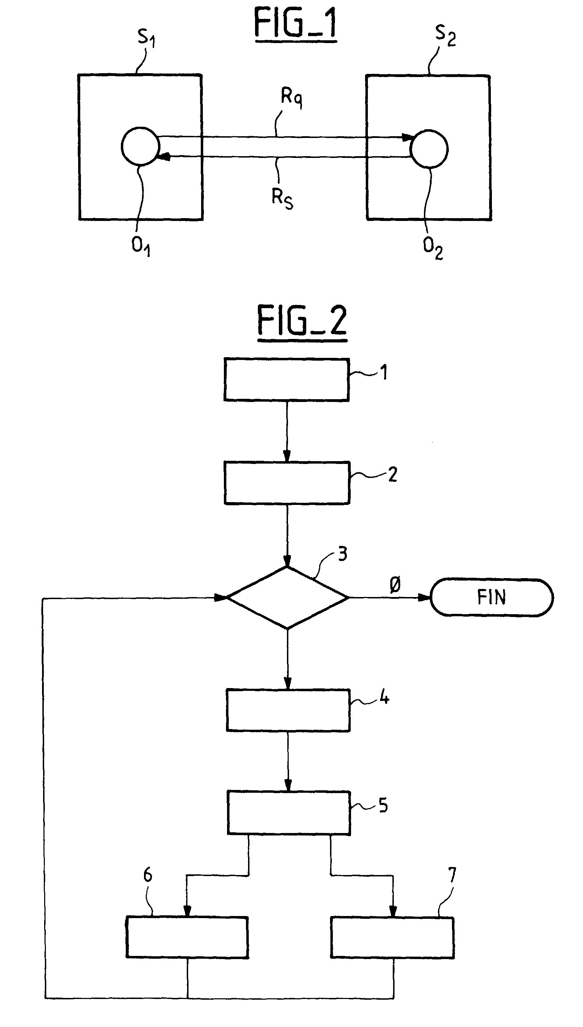

La figure 1, jointe, illustre le fonctionnement du mécanisme qui est alors mis en oeuvre. La requête Rq est transmise vers l'objet O₂ situé sur la station S₂. Le traitement de la requête se déroule alors sur cette station S₂, et, finalement, le résultat Rs de la requête est renvoyé vers l'objet O₁, situé sur la station S₁.

Ce mécanisme peut toutefois s'avérer insuffisant dans certains cas de figure, notamment dans le cas d'applications multimédias.

En effet, ce type d'application a souvent à manipuler d'importants volumes de données. Par exemple, une image numérique peut occuper plusieurs Mega-octets de mémoire.

Lorsque le service procuré par l'objet distant est par exemple un traitement de l'image numérique (un filtrage ou une segmentation, par exemple), la requête doit donc contenir la totalité de l'image à traiter, et le résultat, la totalité de l'image traitée. Cette solution engendre donc une utilisation prohibitive de la bande passante de communication entre la station S₁ et la station S₂.

Un autre inconvénient provient du fait que le service procuré par O₂ peut être nécessité par plusieurs objets clients. Ce cas de figure est classique dans une architecture de type client/serveur. Dans cette hypothèse, le serveur peut être rapidement engorgé par les multiples requêtes qui lui sont adressées. Cela étant d'autant plus vrai lorsque les traitements sont longs, comme cela est le cas pour un traitement d'image numérique.

Pour pallier ces inconvénients, une façon de faire est de déplacer (ou copier) l'objet O₂ vers la station S₁. Ainsi :
- Il n'y a plus d'utilisation abusive des ressources de communication du réseau, car le traitement se fait alors de façon locale, sans transmissions bilatérales et multiples des données.
- Il n'y a plus, non plus, d'engorgement du serveur, car le traitement peut être assuré par autant de copie de O₂ qu'il y a de clients, de façon délocalisée.

Toutefois, cette solution pose un problème pour la gestion des pointeurs vers un objet.

En effet, un pointeur est, en pratique, une adresse mémoire. Lorsqu'un objet A possède un pointeur vers un objet B, cela signifie qu'il fait directement référence à une adresse mémoire correspondant à la zone mémoire occupée par l'objet B.

Il est alors clair, qu'après un déplacement (ou une copie) d'un objet, d'une station vers une autre, les pointeurs perdent leur pertinence.

La présente invention a donc pour but de proposer un mécanisme de référence entre objets, différent des pointeurs.

À cette fin, un premier objet de l'invention est une architecture logicielle comportant un ensemble d'objets, chaque objet pouvant posséder des références vers d'autres objets, caractérisée en ce qu'elle comporte en outre :
- une table de correspondance (T), et,
- un ensemble d'objets intermédiaires (O_{I}),
- et en ce que, chaque référence d'un premier objet vers un second objet est représentée par un pointeur au sein dudit premier objet vers un objet intermédiaire, ledit objet intermédiaire possédant un moyen pour rechercher dans la table de correspondance (T) à partir d'un identifiant dudit second objet (IdO_{B}), un pointeur vers le second objet (PtrO_{B}).

Un second but de l'invention est un procédé permettant de mettre en place cette architecture logicielle. À cet effet, un second objet de l'invention est un procédé pour la transmission d'un objet depuis une première station vers une seconde station, au sein d'un environnement de traitement distribué, ledit objet possédant des références vers d'autres objets, caractérisé en ce qu'il comporte les étapes ordonnées suivantes :
- attribution d'un identifiant à chacun desdits autres objets (1),
- transmission dudit objet depuis ladite première station, vers ladite seconde station (2),
- Pour chacun desdits autres objets (3),
   - remplacement de chaque référence vers l'autre objet courant par un pointeur vers un objet intermédiaire (4),
   - recherche dans une table de correspondance, d'une ligne contenant la valeur de l'identifiant dudit autre objet courant (5),
   - en cas de succès de la recherche, mise à jour d'un pointeur dans ledit objet intermédiaire, vers la ligne trouvée (6),
   - sinon, création d'une nouvelle ligne dans ladite table de correspondance, contenant ladite valeur, et mise à jour d'un pointeur dans ledit objet intermédiaire, vers ladite nouvelle ligne (7).

Les caractéristiques de la présente invention, ainsi que les avantages qu'elle procure, seront mieux compris à la lumière de la description faite ci-après en référence aux figures annexées dans lesquelles :

La figure 1, déjà décrite, représente un état de la technique procuré par les DPE *(Distributed Processing Environment).*

La figure 2 représente un organigramme correspondant au procédé de transmission d'objets entre deux stations.

La figure 3 illustre schématiquement l'architecture logicielle conforme à la présente invention.

La référence 1 représente une étape d'identification des objets appartenant à l'arbre de composition de l'objet à transmettre. Autrement dit, un identifiant est affecté à l'objet à transmettre, ainsi qu'à chacun des objets vers lequel il possède un pointeur. Un identifiant est aussi affecté à chaque objet pointé par ces derniers, et ainsi de suite, jusqu'à on l'on arrive à des feuilles, c'est-à-dire des objets qui ne possèdent de pointeurs vers aucun autre objet.

La façon exacte dont les identifiants sont affectés est indifférente. La seule contrainte est qu'ils doivent être uniques pour la session entre les deux stations.

La référence 2 représente la transmission proprement dite de l'objet. Cette transmission consiste à transmettre les données propres à cet objet (i.e. les attributs) vers la seconde station, puis à créer sur cette station un nouvel objet O_{A} avec ces données.

L'étape référencée 3 consiste à choisir dans l'ensemble des objets pointés par l'objet transmis et non déjà traités, un objet dit courant, O_{B}. Ce choix peut se faire de façon absolument quelconque. Lorsque l'ensemble est vide, le procédé se termine (référence Ø).

L'étape référencée 4 consiste à remplacer dans l'objet transmis O_{A}, tous les pointeurs vers ledit objet courant, O_{B}, par un pointeur vers un objet intermédiaire O_{I}, créé à ce moment-là.

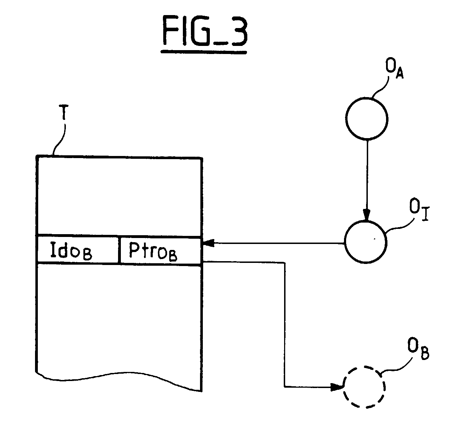

La référence 5 de la figure 2 représente une étape de recherche dans une table de correspondance, référencée T sur la figure 3, de l'identifiant IdO_{B} de l'objet courant O_{B}. Deux cas se présentent selon que l'identifiant IdO_{B} est trouvé ou non, dans cette table de correspondance T.

La référence 6 représente l'étape de traitement effectuée lorsque la recherche a abouti avec succès. Dans ce cas, un pointeur est mis à jour dans l'objet intermédiaire O_{I} vers la ligne trouvée dans la table de correspondance T.

La référence 7 représente l'étape de traitement qui est effectuée en cas d'échec de la recherche. Dans ce cas de figure, une nouvelle ligne est ajoutée à la table de correspondance T qui contient l'identifiant IdO_{B} de l'objet courant, et un pointeur est mis à jour dans l'objet intermédiaire, qui pointe vers cette nouvelle ligne.

Il est à noter que chaque ligne de la table de correspondance T comporte, en plus d'un identifiant d'objet, un pointeur PtrO_{B}. Ce pointeur référence l'objet courant O_{B} lorsque celui-ci a été aussi transmis sur la seconde station.

Le procédé se poursuit alors à l'étape référencée 3 sur la figure 2, jusqu'à épuisement des objets référencés.

Lorsque l'objet transmis a besoin des services offerts par un des objets référencés, il fait appel à l'objet intermédiaire correspondant. Via la table de correspondance T, l'objet intermédiaire est en mesure de connaître un pointeur vers cet objet référencé. Ce pointeur peut, avantageusement mais de façon optionnelle, être mémorisé au niveau de l'objet intermédiaire afin d'éviter d'accéder à la table de correspondance T les fois suivantes.

Dans le cas où l'objet référencé n'est pas présent sur la station, le pointeur en question est nul. On peut à ce moment-là déclencher un traitement particulier :
- transmettre l'objet en question sur la station courante, conformément au procédé selon l'invention,
- démarrer un traitement par défaut,
- renvoyer un message d'erreur,
- etc.

Le mécanisme d'appel de l'objet intermédiaire et le traitement qui s'ensuit (recherche dans la table de correspondance T,...) peut être rendu transparent pour l'utilisateur par le biais des mécanismes de surcharge d'opérateurs disponibles avec un langage orienté objets tel C++.

De façon typique en effet, un appel d'une méthode s'effectue par une expression du type « O_{I}→m », dans laquelle m est une méthode de l'objet O_{B}. Ici, m n'est pas une méthode de l'objet intermédiaire O_{I}, mais de l'objet référencé O_{B} qui lui correspond. Un résultat similaire du point de vue du programmeur est obtenu en surchargeant l'opérateur « → ». Lorsque l'expression ci-dessus sera rencontrée, le traitement surchargeant l'opérateur « → » sera appelé, et ce sera lui qui effectuera les étapes décrites ci-dessus (recherche dans la table de correspondance T, appel de la méthode m en utilisant le « bon » pointeur, transmission de l'objet correspondant si nécessaire...).

Cette mise en oeuvre, quoique présentant des avantages certains, n'est pas unique, et l'invention ne saurait être comprise comme se limitant à cette mise en oeuvre.

## Revendications

1. Architecture logicielle comportant un ensemble d'objets, chaque objet pouvant posséder des références vers d'autres objets, caractérisée en ce que ladite architecture comporte en outre,
• une table de correspondance (T), et,
• un ensemble d'objets intermédiaires (O_{I}),
• et en ce que, chaque référence d'un premier objet vers un second objet est représentée par un pointeur au sein dudit premier objet vers un objet intermédiaire, ledit objet intermédiaire possédant un moyen pour rechercher dans ladite table de correspondance (T) à partir d'un identifiant dudit second objet (IdO_{B}), un pointeur vers ledit second objet (PtrO_{B}).

2. Architecture selon la revendication précédente caractérisée en ce que ledit objet intermédiaire possède en outre un moyen pour mémoriser ledit pointeur vers ledit second objet (PtrO_{B}).

3. Procédé pour la transmission d'un objet depuis une première station vers une seconde station, au sein d'un environnement de traitement distribué, ledit objet possédant des références vers d'autres objets, caractérisé en ce qu'il comporte les étapes ordonnées suivantes :
• attribution d'un identifiant à chacun desdits autres objets (1),
• transmission dudit objet depuis ladite première station, vers ladite seconde station (2),
• Pour chacun desdits autres objets (3),
• remplacement de chaque référence vers l'autre objet courant par un pointeur vers un objet intermédiaire (4),
• recherche dans une table de correspondance, d'une ligne contenant la valeur de l'identifiant dudit autre objet courant (5),
• en cas de succès de la recherche, mise à jour d'un pointeur dans ledit objet intermédiaire, vers la ligne trouvée (6),
• sinon, création d'une nouvelle ligne dans ladite table de correspondance, contenant ladite valeur, et mise à jour d'un pointeur dans ledit objet intermédiaire, vers ladite nouvelle ligne (7).
